# DEMANDE DE BREVET EUROPEEN

(11) **EP 0 851 334 A1**
(43) Date de publication de la demande: **01.07.1998**
(21) Numéro de dépôt: 97403144.5
(22) Date de dépôt: 23.12.1997
(51) Int. Cl.: G05G 25/02, F16H 51/00

(54) **Levier de commande d'un dispositif résistant aux vibrations**

(30) Priorité: 31.12.1996 FR 9616268
(71) Demandeur: Crouzet Automatismes, 26900 Valence 09 (FR)
(72) Inventeur: Vinard, Pierre, 94117 Arcueil Cédex (FR); Blain, Gérard, 94117 Arcueil Cédex (FR)
(74) Mandataire: Simonnet, Christine

(57) **Abrégé**

La présente invention concerne un levier (20) de commande d'un dispositif, destiné à être sollicité par un organe d'actionnement (30).

En vue de réduire son usure, il comporte un manche (22) équipé d'un galet (21) sollicité par l'organe d'actionnement. Le galet (21) est susceptible de se déplacer en rotation et en translation.

La course du galet (21) est limitée en translation par deux éléments élastiques (23,24) placés de part et d'autre du galet (21) et travaillant en opposition.

Le levier de commande peut être notamment celui d'un commutateur fin de course utilisé dans un milieu susceptible de vibrer.

## Description

La présente invention est relative à un levier de commande d'un dispositif, résistant aux vibrations. Le dispositif peut être notamment un commutateur électrique fin de course, un interrupteur etc......

Le levier de commande d'un tel dispositif est destiné à pivoter entre deux positions extrêmes. Dans l'une des positions du levier, dite position de travail, le dispositif est armé ce qui peut correspondre, par exemple, à la fermeture ou à l'ouverture d'un circuit électrique auquel est connecté le dispositif. Dans l'autre position du levier, dite position de repos le dispositif est au repos, ce qui peut correspondre, par exemple, à l'ouverture ou la fermeture du circuit électrique.

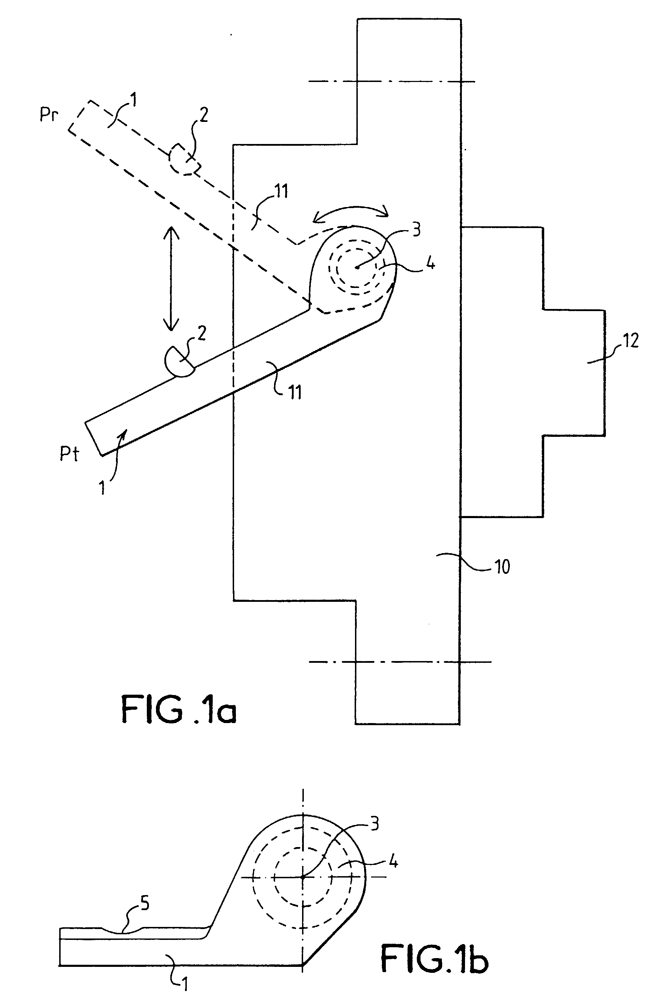

La figure 1a montre schématiquement un commutateur électrique 10 équipé d'un levier 1 classique. La référence 12 représente un connecteur assurant la connexion du commutateur 10 au circuit électrique (non représenté).

Le levier 1 comporte un manche 11 qui pivote autour d'un axe 3 placé du côté de sa base, son extrémité opposée à la base est libre. Les deux positions extrêmes Pr, Pt du levier 1 sont illustrées. Dans l'exemple décrit, on suppose que levier 1 en position de travail Pt est représenté en traits pleins et que le levier en position de repos Pr est représenté en pointillés.

Le levier 1 est destiné à être actionné entre ces deux positions par un organe d'actionnement 2. Sur l'exemple de la figure la, l'organe d'actionnement 2 est en forme de doigt, sensiblement transversal au manche 11 et il est mobile en translation avec un mouvement de va et vient. L'organe d'actionnement 2 peut être guidé sur des rails. L'organe d'actionnement 2 pousse le levier en position de travail Pt et lorsqu'il se retire, le levier 1, prend sa position de repos Pr rappelé par un dispositif de rappel 4. Même lorsque le levier 1 est en position de repos, l'organe d'actionnement 2 peut être en contact avec le manche 11 du levier 1. En position de travail Pt du levier 1, l'organe d'actionnement 2 s'oppose au dispositif de rappel 4. La zone de contact entre le manche 11 du levier 1 et l'organe d'actionnement 2 peut être considérée comme ponctuelle.

Le manche 11 et l'organe d'actionnement 2 peuvent avoir des surfaces en portions de cylindre de révolution, d'axes sécants ou en portions de sphère au niveau de leur contact.

Le dispositif 10 équipé de son levier 1 de commande peut fonctionner dans un environnement susceptible de vibrer, par exemple, dans un aéronef ou dans un autre véhicule. S'il s'agit d'un commutateur fin de course, il peut, par exemple, servir de détecteur d'ouverture ou de fermeture de porte de soute, de détecteur de la position rentrée ou sortie du train d'atterrissage, de détecteur de position de portes ou de détecteur de position d'inverseur de poussée. Généralement pendant le vol, le levier est en position de travail.

Il n'y a aucune raison pour que le levier 1 et l'organe d'actionnement 2 vibrent avec la même phase, la même période et la même direction puisqu'ils ne sont pas solidaires l'un de l'autre.

Au bout d'un certain temps de fonctionnement, il se produit une usure à la fois du manche 11 et de l'organe d'actionnement 2 dans leur zone de contact. Cette usure en créant une portion en creux 5 au niveau du levier 1 et une autre au niveau de l'organe de commande 2, diminue la fiabilité de la fonction assurée par le commutateur 10. La figure 1b montre un levier 1 agrandi de manière à mettre en évidence la portion en creux 5 résultant de l'usure. Il n'est pas rare qu'au bout de 6 000 heures de vol, le manche 11 du levier 1 d'un tel commutateur présente une usure de l'ordre de 0,6 millimètre. Si l'organe d'actionnement 2 peut être changé relativement facilement à bas coût, il n'en est pas de même pour le levier 1. Il est solidaire du commutateur 10, son démontage n'est pas aisé par l'utilisateur et généralement on procède à un échange du commutateur, le coût s'en ressent.

La présente invention vise à proposer un levier qui résiste aux vibrations sans pratiquement s'user. Un tel levier peut fonctionner pendant un temps tout à fait conséquent sans maintenance.

Plus précisément la présente invention a pour objet un levier de commande d'un dispositif, destiné à être sollicité par un organe d'actionnement, caractérisé en ce qu'il comporte, en vue de réduire son usure, un manche équipé d'un galet sollicité par l'organe d'actionnement, susceptible de se déplacer en rotation autour du manche et en translation le long du manche, le galet ayant une course en translation limitée par deux éléments élastiques placés de part et d'autre du galet et travaillant en opposition.

Si le dispositif équipé de son levier est destiné à travailler à hautes température un ressort boudin ou un ressort à lame peuvent être utilisés comme élément élastique. Si la température de fonctionnement n'est pas critique, un bloc d'un matériau élastique tel que du cautchouc ou un élastomère peut être utilisé en tant qu'élément élastique.

Pour pouvoir travailler en opposition, les éléments élastiques peuvent être immobilisés par rapport au manche à l'aide de butées. Un clip, un écrou ou tout simplement un épaulement du manche peuvent être utilisés en tant que butées.

Un galet à base de bronze donne de bons résultats au point de vue usure. Le manche lui peut être réalisé à base d'acier.

La présente invention conceme aussi le dispositif équipé d'un tel levier.

D'autres caractéristiques et avantages de l'invention apparaîtront avec la description de certains de ses modes de réalisation illustrée par les figures qui représentent:
- la figure 1a (déjà décrite) un dispositif équipé d'un levier classique et la figure 1b (déjà décrite) un levier classique usé;
- les figures 2a, 2b respectivement en coupe et en vue de dessus un exemple d'un levier selon l'invention sollicité par un organe d'actionnement;
- la figure 3 un autre exemple d'un levier selon l'invention;
- la figure 4 un autre exemple d'un levier selon l'invention monté dans un dispositif selon l'invention.

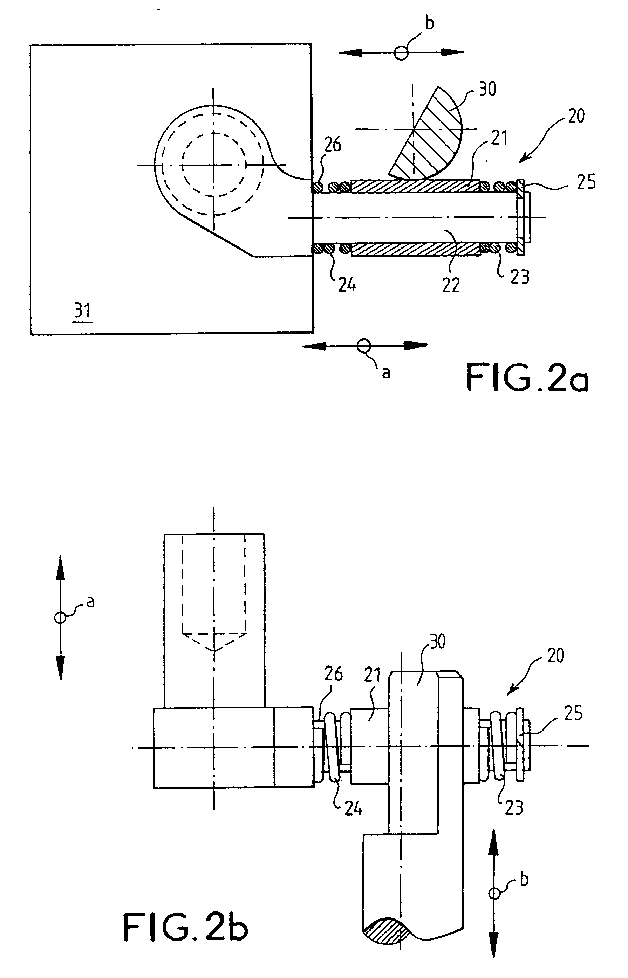

La figure 2a montre en coupe longitudinale un exemple d'un levier 20 selon l'invention. Il est destiné à être actionné par un organe d'actionnement 30. Il fait parti d'un dispositif 31 qui peut être un commutateur fin de course, par exemple, et qui est représenté schématiquement.

La figure 2b montre, en vue de dessus, le levier 20 selon l'invention sollicité par l'organe d'actionnement 30 mais pas le commutateur.

Le manche 22 du levier 20 est protégé par un galet 21 qui l'entoure. L'organe d'actionnement 30 vient solliciter le levier 20 au niveau du galet 21. L'organe d'actionnement 30, pour solliciter le levier, est animé d'un mouvement de va et vient en translation ou en rotation mais de plus est soumis à des vibrations. Le galet 21 est susceptible de se déplacer librement en rotation autour du manche 22. Le galet 21 est également susceptible de se déplacer en translation le long du manche 22.

La course en translation du galet est limitée par deux éléments élastiques 23, 24 placés de part et d'autre du galet 21 et travaillant en opposition. Ces éléments élastiques 23, 24 encaissent, chacun leur tour, des chocs et vibrations provoqués par les déplacements du galet 21 en translation dans un sens ou dans l'autre. Les éléments élastiques 23, 24 tendent à maintenir le galet dans une position médiane.

Plusieurs types d'éléments élastiques peuvent être utilisés. Sur les figures 2a, 2b les éléments élastiques 23, 24 sont des ressorts boudins enfilés sur le manche 22.

L'un des éléments élastiques 23, celui qui est le plus près de l'extrémité libre du manche 22 est, immobilisé par rapport au manche à l'aide d'une butée 25. Cette butée 25 est représentée sous la forme d'un clip qui est un anneau élastique qui se referme sur le manche 22. Ce clip peut être de type circlip mais d'autres éléments ayant la même fonction sont utilisables.

L'autre élément élastique 24, celui qui est le plus près de la base du manche, est immobilisé par rapport au manche à l'aide d'une autre butée 26 qui est formée par un épaulement du manche 22. D'autres types de butées, à cet endroit, sont utilisables.

Le galet 21 coopérant avec les deux éléments élastiques 23, 24 est capable d'absorber les vibrations propres dont sont animés le levier 20 et l'organe d'actionnement 30. Les doubles flèches référencées a, b représentent respectivement des vibrations dont peuvent être animés le levier 20 et l'organe d'actionnement 30.

Les directions des vibrations ont changé entre la figure 2a et la figure 2b. C'est ce qui peut se produire pendant le décollage et l'attérissage, par exemple.

Sur les figures 2a, 2b la section droite du manche 22 du levier 20 est circulaire, alors que celle de l'organe d'actionnement 30 est demi circulaire. La zone de contact entre le manche 22 et l'organe d'actionnement est sensiblement ponctuelle, l'organe d'actionnement étant sensiblement transversal au manche. D'autres formes sont envisageables pour le manche et l'organe d'actionnement, deux surfaces en portion de sphère pourraient être en contact ou on pourrait avoir une combinaison entre portion de sphère et portion de cylindre.

Le galet 21 peut être réalisé à base de bronze et le manche 22 à base d'acier, par exemple.

Un test en vibration d'un levier selon l'invention, sollicité par un organe d'actionnement du même type que celui illustré aux figures 2a, 2b a été effectué pendant trente heures. A l'issu du test, le levier ne présentait pas d'usure visible même à la loupe. Un levier classique tel que celui de la figure 1b soumis au même test présentait une usure d'environ 0,03 millimètre.

Un avantage d'utiliser des ressorts boudins tels que ceux des figures 2a, 2b est qu'ils sont susceptibles de travailler à hautes températures.

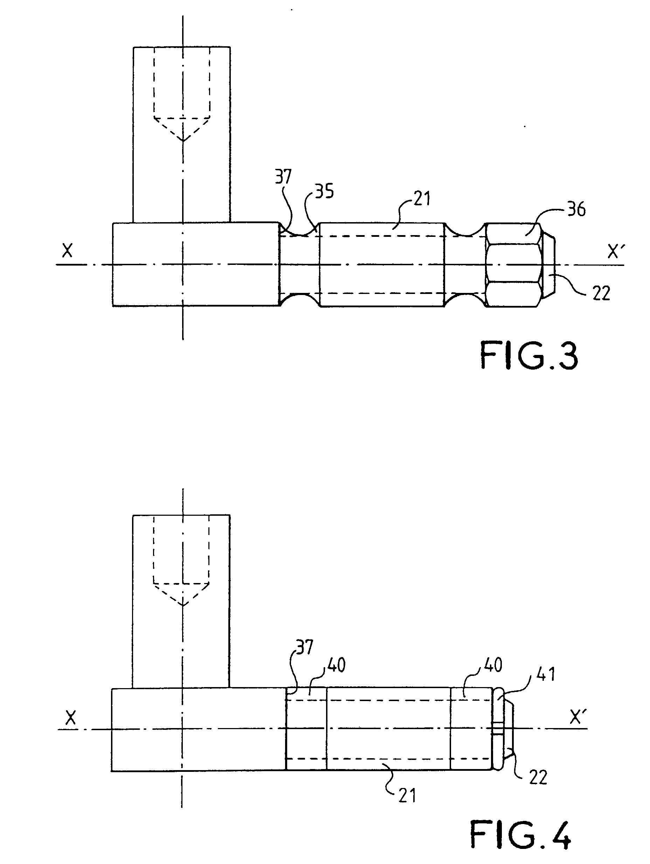

La figure 3 représente une variante d'un levier selon l'invention susceptible de supporter également les hautes températures. On retrouve comme sur les figures 2a, 2b, le galet 21 autour du manche 22 du levier. Maintenant les éléments élastiques travaillant en opposition sont des ressorts à lame 35 en forme d'anneau. Ces ressorts à lame 35 s'incurvent plus ou moins selon la position du galet 21. L'un de ces ressorts à lame 35 vient en appui sur une butée qui est représentée sous forme d'un écrou 36 ou autres. Il s'agit du ressort à lame qui est du côté de l'extrémité libre du manche 22. L'autre ressort à lame 35 vient en appui sur une butée qui est dans cet exemple un épaulement 37 du manche 22. Le fait d'utiliser comme butée un épaulement 37 a pour avantage la simplicité de réalisation.

Si le dispositif équipé du levier selon l'invention n'est pas destiné à fonctionner à des températures élevées, les éléments élastiques peuvent être des blocs de matériau élastique tel que le cautchouc ou un élastomère. Dans la configuration représentée sur la figure 4, les éléments élastiques 40 sont des rondelles d'élastomère enfilées sur le manche 22. Comme butée, on apperçoit à la base du manche 22 un épaulement 37 et à l'extrémité libre du manche 22 un clip 41. Ce clip a la forme d'un jonc.

Sur tous les exemples de levier représentés, les deux éléments élastiques sont de même nature, il est bien entendu que ce n'est pas une obligation.

## Revendications

1. Levier (20) de commande d'un dispositif, destiné à être sollicité par un organe d'actionnement (30), caractérisé en ce qu'il comporte, en vue de réduire son usure, un manche (22) équipé d'un galet (21) sollicité par l'organe d'actionnement (30), susceptible de se déplacer en rotation autour du manche (22) et en translation le long du manche (22), le galet (21) ayant une course en translation limitée par deux éléments élastiques (23, 24) placés de part et d'autre du galet (21) et travaillant en opposition.

2. Levier selon la revendication 1, caractérisé en ce qu'il comporte un ressort boudin (23, 24) ou un ressort à lame (35) en tant qu'élément élastique.

3. Levier selon l'une des revendications 1 ou 2, caractérisé en ce qu'il comporte un bloc (40) d'un matériau élastique tel que le caoutchouc ou un élastomère en tant qu'élément élastique.

4. Levier selon l'une des revendications 1 à 3, caractérisé en ce que les éléments élastiques (23, 24) sont immobilisés par rapport au manche (22) à l'aide de butées (25, 26, 37, 41).

5. Levier selon la revendication 4, caractérisé en ce qu'il comporte un épaulement (37) du manche (22) en tant que butée.

6. Levier selon l'une des revendications 4 ou 5, caractérisé en ce qu'il comporte un clip (25) placé autour du manche (22) en tant que butée.

7. Levier selon l'une des revendications 4 à 6, caractérisé en ce qu'il comporte un écrou (36) vissé autour du manche (22) en tant que butée.

8. Levier selon l'une des revendications 1 à 7, caractérisé en ce que le galet (21) est réalisé à base de bronze.

9. Levier selon l'une des revendications 1 à 8, caractérisé en ce que le manche (22) est réalisé à base d'acier.

10. Levier selon l'une des revendications 1 à 9, caractérisé en ce que la sollicitation à laquelle il est soumis est sensiblement ponctuelle.

11. Dispositif caractérisé en ce qu'il comporte un levier selon l'une des revendications 1 à 10.

12. Dispositif selon la revendication 11, caractérisé en ce que c'est un commutateur électrique fin de course.
